(19) **Europäisches Patentamt / European Patent Office / Office européen des brevets**

(11) **EP 4 579 235 A1**

(12) **EUROPEAN PATENT APPLICATION**
published in accordance with Art. 153(4) EPC

(43) Date of publication:
**02.07.2025 Bulletin 2025/27**

(21) Application number: **23856698.8**

(22) Date of filing: **24.08.2023**

(51) International Patent Classification (IPC):
*G01N 30/02* (2006.01)    *G01N 30/26* (2006.01)
*G01N 30/72* (2006.01)

(52) Cooperative Patent Classification (CPC):
**G01N 30/02; G01N 30/06; G01N 30/26;**
**G01N 30/34; G01N 30/72**

(86) International application number:
**PCT/CN2023/114711**

(87) International publication number:
**WO 2024/041610 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 CN 202211024053**

(71) Applicants:
• **Research Center for Eco-Environmental Sciences,**
**Chinese Academy of Sciences**
**Beijing 100085 (CN)**
• **Shimadzu (China) Co., Ltd.**
**Shanghai 200233 (CN)**

(72) Inventors:
• **WANG, Yawei**
**Beijing 100085 (CN)**

• **HE, Anen**
**Beijing 100085 (CN)**
• **LI, Juan**
**Beijing 100085 (CN)**
• **LI, Xiaodong**
**Beijing 100020 (CN)**
• **GUO, Yanli**
**Beijing 100020 (CN)**
• **YANG, Xiaochun**
**Beijing 100020 (CN)**
• **SHIMA, Keisuke**
**Beijing 100020 (CN)**
• **CAO, Lei**
**Beijing 100020 (CN)**

(74) Representative: **Müller-Boré & Partner**
**Patentanwälte PartG mbB**
**Friedenheimer Brücke 21**
**80639 München (DE)**

(54) **METHOD FOR DETERMINATION OF CONCENTRATIONS OF PER- AND POLYFLUOROALKYL SUBSTANCES, AND LIQUID CHROMATOGRAPHY-TANDEM MASS SPECTROMETRY SYSTEM**

(57) The present disclosure provides a method for measuring a concentration of a per- and polyfluoroalkyl substance and a liquid chromatography-tandem mass spectrometry system. The method includes: measuring concentrations of a plurality of per- and polyfluoroalkyl substances in a sample by liquid chromatography-tandem mass spectrometry in a primary measurement process of eluting the sample with an alkaline mobile phase, in which the plurality of per- and polyfluoroalkyl substances at least include one or more perfluoroalkyl phosphonic acids/phosphinic acids or polyfluoroalkyl phosphate esters. According to the method, by using the alkaline mobile phase to elute the sample, the rapid analysis on 93 PFASs including perfluoroalkyl phosphonic acids/phosphinic acids and polyfluoroalkyl phosphate esters can be completed by single injection. Additionally, the present disclosure also provides a method to rapidly analyze 10 PFASs by GC-MS/MS.

FIG. 2

## Description

### Technical Field

The disclosure relates to the field of analytical technology, in particular to a method for measuring a concentration of a per- and polyfluoroalkyl substance and a liquid chromatography-tandem mass spectrometry system.

### Background Art

Per- and polyfluoroalkyl substances (PFASs) have been widely used in industry and life due to surface activity, thermal stability, and hydrophobic and oleophobic properties thereof. PFASs, especially perfluorooctanesulfonic acid (PFOS) and perfluorooctanoic acid (PFOA), have attracted widespread attention due to persistence, long-range migration capacity, bioaccumulation capacity, and potential toxicity, and the like. PFOS and PFOA are now included in the list of persistent organic pollutants of the Stockholm Convention and are restricted in production and use. As alternatives to PFOS and PFOA, more types of PFASs have been developed and produced. Many research papers have also reported on detection methods of these new alternatives with potential risks in different substrates.

At present, there are a large number of literatures, standards and regulations that provide detection methods for perfluoroalkyl carboxylic acids (PFCAs), perfluoroalkyl sulfonic acids (PFSAs), perfluoroalkane sulfonamides (FASAs), and the like. However, there are few relevant literature reports on perfluoroalkyl phosphonic acids (PFPAs), perfluoroalkyl phosphinic acids (PFPiAs) and polyfluoroalkyl phosphate esters (PAPs), and the detection methods are also very limited.

The article "Determination of per- and polyfluorinated compounds in surface water by ultra-high performance liquid chromatography-tandem mass spectrometry", which is published by Liu Xiaolei et al. in Chinese Journal of Analytical Chemistry, 2018, vol 9, p1400, describes an analytical method for determining 23 PFASs in water, including PFCAs, PFSAs, PFPAs, PFPiAs, and PAPs, using solid phase extraction-ultra-performance liquid chromatography-tandem mass spectrometry (LC-MS/MS). The analytical method uses a plurality of different types of mobile phases to elute samples multiple times.

In summary, the prior art lacks a method for quickly and simultaneously measuring concentrations of more types of per- and polyfluoroalkyl substances, especially a rapid determination method for samples containing perfluoroalkyl phosphonic acids, perfluoroalkyl phosphinic acids, or polyfluoroalkyl phosphate esters.

### Summary of the Invention

Through continuous and intensive study on PFASs analytical technology in related art, the inventors have found that by replacing a mobile phase with an alkaline mobile phase, more types of PFASs can be effectively separated on a retention time scale, and more types of PFASs can be better ionized and have better response on a mass spectrometer detector, resulting in higher detection sensitivity. In particular, samples including PFPAs, PFPiAs and PAPs can be effectively separated and detected. In combination with LC-MS/MS, up to 93 PFASs targets can be accurately measured by single injection.

Based on the above content, a first aspect of the present disclosure provides a method for measuring a concentration of PFASs, the method including: measuring concentrations of a plurality of per- and polyfluoroalkyl substances in a sample by LC-MS/MS in a primary measurement process of eluting the sample with an alkaline mobile phase, in which the plurality of per- and polyfluoroalkyl substances at least include one or more PFPAs/PFPiAs or PAPs.

Due to a restriction of a pH range of a chromatographic column, generally, the alkaline mobile phase is rarely used as a mobile phase in a LC-MS/MS system. The inventors have found through research that by using an alkaline mobile phase to elute a sample, 93 PFASs targets, including PFPAs/PFPiAs and PAPs, can be eluted sequentially at different retention times in single injection, and further, the eluted PFASs can be obviously distinguished by measuring different ion pairs using the LC-MS/MS, so that 93 PFASs with vastly different physical and chemical properties can be rapidly and sensitively analyzed by single injection.

Optionally, the alkaline mobile phase is an alkaline mobile phase with pH = 8 to 10. Preferably, the alkaline mobile phase is an alkaline mobile phase having a pH substantially equal to 9.

Alternatively, the plurality of PFASs include a plurality of combinations of PFCAs, PFSAs, FTSAs, perfluoroalkyl ether sulfonic acids (PFESAs), perfluoroalkyl ether carboxylic acids (PFECAs), perfluoroalkane sulfonaimido acetic acids (FASAAs), PFPAs, PFPiAs, PAPs, fluorotelomer sulfonic acids (FTSAs), fluorotelomer carboxylic acids (FTCAs), and fluorotelomer betaine (FTB).

Optionally, in a primary measurement process, the tandem mass spectrometry switches between a positive ion scanning mode and a negative ion scanning mode according to the type of the PFASs to be measured. Through the above method, the optional technical solution can also complete the accurate measurement of mainstream alternatives such as FTB.

A second aspect of the present disclosure provides a LC-MS/MS, which equip with PFASs concentration measurement mode. To be specific, the LC-MS/MS operating in the PFASs concentration measurement mode is configured to measure concentrations of a plurality of PFASs in a sample in a primary measurement process of eluting the sample with an alkaline mobile phase, and the large number of PFASs at least include one or more PFPAs/PFPiAs or PAPs.

Optionally, the LC-MS/MS is equipped with PFASs concentration measurement pipeline, and a pipe material used in the per- and polyfluoroalkyl substance concentration measurement pipeline does not contain fluorine. The optional technical solution can prevent the fluorine from being dissolved by a solvent and affecting measurement results by avoiding the use of pipe materials containing fluorine impurities.

Optionally, the liquid chromatography-tandem mass spectrometry system has a delay column, and the delay column is disposed between a liquid pump and an analytical column. The use of the delay column can delay fluorine impurities present in the system, such as in the mobile phase, thereby preventing the fluorine impurities from interfering with sample analysis.

Optionally, the delay column is a C18 reversed phase chromatography column, and the analytical column is a phenyl-hexyl column.

Optionally, the LC-MS/MS uses an electrospray ion source as an ion source, a desolvation tube temperature of the electrospray ion source is 100°C to 150°C, a heating module temperature is 200°C to 250°C, and an interface temperature is 300°C to 350°C. In the optional technical solution, the temperature of the desolvation tube, the heating module and the interface can be lowered to reduce an in-source pyrolysis of the ion source and improve detection sensitivity.

**Descriptions of the Drawings**

FIG. 1 is a schematic structural diagram of an LC-MS/MS system according to an embodiment of the present disclosure.

FIG. 2 is a chromatogram obtained by analyzing 93 PFASs by single injection using the LC-MS/MS system according to the embodiment of the present disclosure.

FIG. 3 to FIG. 6 are standard curves established using a standard solution by taking PFOA, PFOS, ADONA and PFODA as targets in the LC-MS/MS system according to the embodiment of the present disclosure.

FIG. 7 is a chromatogram obtained by analyzing 10 fluorotelomer alcohols (FTOHs) by the single injection using a GC-MS/MS system according to the embodiment of the present disclosure.

List of Reference Numerals:

<Air Conditioning System with Fan Coil Unit>

Liquid pump 1, delay column 2, autosampler 3, analytical column 4, column oven 5, and triple quadrupole mass spectrometer 6.

**Detailed Description**

The technical scheme in the embodiments will be clearly and completely described below with reference to the accompanying drawings in the embodiment, and obviously, the described embodiments are merely a part of the embodiments of the present disclosure, and are not all embodiments. Based on the embodiments of the present disclosure, all other embodiments obtained by those skilled in the art without creative efforts shall fall within the scope of the present disclosure.

1. <Terms and Definitions>

Per- and polyfluoroalkyl substances are alkyl compounds in which all or more hydrogen atoms are replaced by fluorine atoms, and may include multiple categories of compounds such as perfluoroalkyl carboxylic acids, perfluoroalkyl sulfonic acids, perfluoroalkyl sulfonamides, perfluoroalkyl ether sulfonic acids, perfluoroalkyl ether carboxylic acids, perfluoroalkane sulfonaimido acetic acids, perfluoroalkyl phosphonic acids, perfluoroalkyl phosphinic acids, polyfluoroalkyl phosphate esters, fluorotelomers (such as fluorotelomer alcohols, fluorotelomer sulfonic acids, fluorotelomer carboxylic acids, and fluorotelemer betaine).

The term "perfluoroalkyl phosphonic acids/phosphinic acids" refers to one selected from perfluoroalkyl phosphonic acids and perfluoroalkyl phosphinic acids.

## 2. <Device Composition of System>

### 2.1 Device composition of LC-MS/MS system

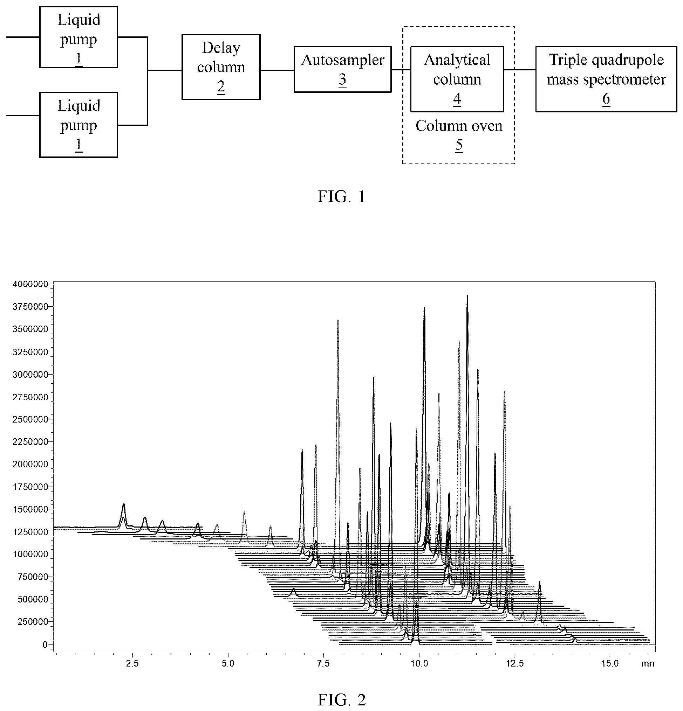

Referring to FIG. 1, in this embodiment, a LC-MS/MS is used to measure PFASs. The LC-MS/MS analysis system includes a dual pump (with a pressure resistance of 70 MPa or more, consisting of two parallel liquid pumps 1), an autosampler 3 (with a pressure resistance of 70 MPa or more), a column oven 5, a triple quadrupole mass spectrometer 6 (tandem mass spectrometer), a delay column 2 and an analytical column 4. Fluorine-containing resin pipes are not used in the flow path. All pipes are replaced with stainless steel pipes, PE pipes, or PP pipes to prevent fluorine from being dissolved by the solvent and affecting measurement results.

The delay column 2 is disposed between the liquid pump 1 and the analytical column 4, and is further disposed between the liquid pump 1 and the autosampler 3. In this embodiment, a C18 reversed phase chromatography column is used as the delay column 2, specifically a chromatographic column with model Shim-pack XR-ODS, 3 mm ID×50 mm, 2.2 $\mu$m particle size, and is used for delaying fluorine impurities in the system, such as in the mobile phase, to prevent the fluorine impurities from interfering with sample analysis.

The analytical column 4 is a phenyl-hexyl column, specifically a chromatographic column with model Shim-pack GIST Phenyl-Hexyl, 2.1 mm ID×100 mm, 3 $\mu$m particle size, is a chromatographic column suitable for using an alkaline mobile phase, and is used for chromatographic separation of PFASs in samples.

An electrospray ion source was used as an ion source of the triple quadrupole mass spectrometer 6. A working mode of the triple quadrupole mass spectrometer 6 may be a multiple reaction monitoring (MRM) mode or a selected reaction monitoring (SRM) mode, preferably the MRM mode.

### 2.2 Device composition of gas chromatography-tandem mass spectrometry system (GC-MS/MS)

A GC-MS/MS analytical system includes a liquid autosampler, a liquid sampling disc, a gas chromatography-triple quadrupole tandem mass spectrometer and a gas chromatography analytical column (not shown). The GC-MS/MS system gasifies a liquid sample and then carries out sample analysis, and the GC-MS/MS in this embodiment is mainly used for analyzing fluorotelomer alcohols in the sample.
The model of the analytical column used for the gas chromatography is InertCap Pure-WAX 30 m×0.25 mm I.D. df = 0.25 $\mu$m (GL Sciences)

## 3. <Reagents and Materials>

### 3.1 Standard Solution

a) Standard stock solution of PFASs: $\rho$ = 2000 $\mu$g/L

Certified standard solutions can be purchased directly, or the standard solution can be prepared with standard substances and methanol. The stock solution is sealed and stored with a brown sample bottle, stored at -20°C or described with reference to the manufacturer's product. In use, the standard stock solution is returned to room temperature and shaken evenly.

b) Standard working liquid of PFASs: $\rho$ = 200 $\mu$g/L

The standard stock solution of the PFASs is diluted with the methanol as needed. The standard working liquid is stored from light at -20°C. In use, the standard working liquid is returned to room temperature and shaken evenly. The shelf life is 30 days.

c) Internal standard stock solution: $\rho$ = 2000 $\mu$g/L

The isotope internal standard is MPFBA, M2-6:2PAP, M2-4:2FTSA, M3PFBS, MPFHxA, M3HFPO-DA, M6:2 FTUCA, M6:2 FTCA, M2-8:2 PAP, M2-6:2FTSA, MPFOA, MPFHxS, M8:2 FTCA, MPFNA, M2-8:2FTSA, MPFDA, d3-N-MeFOSAA, d5-N-EtFOSAA, d7-N-MeFOSE, d9-N-EtFOSE, M10:2 FTCA, MPFOS, M10:2 FTUCA, MPFUdA, MPFDoA, M4:2 FTOH, M6:2 FTOH, M8:2 FTOH, M10:2 FTOH. The certified standard solutions can be purchased directly, or the internal standard stock solution can be prepared with standard substances and methanol. The stock solution is sealed and stored with a brown sample bottle, stored at -20°C or described with reference to the manufacturer's product. In use, the internal standard stock solution is returned to room temperature and shaken evenly.

d) Internal standard working solution: $\rho$ = 200 $\mu$g/L

The internal standard stock solution is diluted with the methanol as needed. The internal standard working solution is stored from light at -20°C. In use, the internal standard working solution is returned to room temperature and shaken evenly. The shelf life is 30 days.

3.2 Reagents

a) Acetonitrile ($CH_3CN$): chromatographic grade.
b) Methanol ($CH_3OH$): chromatographic grade.
c) Ammonium acetate ($CH_3COONH_4$): chromatographic grade.
d) Formic acid (HCOOH): chromatographic grade.
e) Ammonia water: w = 25%, guaranteed reagent.
f) Water: Milli-Q ultrapure water
g) Nitrogen: Purity $\geq$ 99.99%

Solutions such as ammonium acetate and ammonia water/methanol are prepared using the above reagents. All other reagents not described in this section are of chromatographic grade.

4. <Sample Pretreatment>

a. Environmental water sample

An environmental water sample can be collected, transported and stored according to relevant requirements in HJ/T91 and HJ 494. When the environmental water sample is collected, a 1 L polypropylene plastic wide-mouth bottle is used to seal and store the environmental water sample. Information such as sample number, source, and conditions is needed to record in sampling. The sample is transported back to a laboratory and stored at 4°C as soon as possible, and the preparation is completed within 7 days. Before testing, the sample is added with a certain amount of internal standard substance or internal standard working solution, and purified by a solid phase extraction column.

b. Soil Sample

A soil sample (about 1.0 g) is weighed and put into a polypropylene centrifuge tube, and added with the internal standard substance or the internal standard working solution. After 10 mL of methanol is added, ultrasonic extraction is performed for 20 min to obtain a supernatant by centrifugation, the process is repeated 2 times, and the sample is concentrated to 1 mL by nitrogen blowing after the supernatant is combined, diluted with water, and purified by the solid phase extraction column.

c. Dust Sample

Appropriate 0.1 g of the dust sample is added into a 15 mL centrifuge tube, and the internal standard substance or the internal standard working solution is added. 5 mL of methanol is added as an extraction solvent. After three times of shaking extraction, the sample is concentrated to 1 mL by nitrogen. Subsequently, the sample was diluted with water, purified by the solid phase extraction column, and then tested.

d. Textile Sample

The sample is cut to a size of 2 mm $\times$ 2 mm, roughly 1.0 g of the sample is put into a reagent bottle, and added with the internal standard substance or the internal standard working solution. An ethyl acetate solution (10 mL) is added, followed by covering a lid and placing in a water bath at 60°C for 120 minutes. The extracted solution is then filtered through a 0.22 $\mu$m microporous filter membrane, concentrated 10 times by nitrogen blowing, and then placed in a 1.5 mL brown injection bottle for testing.

e. Food Sample

Appropriate 0.1 g of food sample is put into a 15 mL centrifuge tube, added with the internal standard substance or the internal standard working solution. 10 mL of 50 mM KOH methanol solution was added, and shaken at 250 rpm for 0.5 h. An extract is concentrated to 1 mL, 0.5 mL of 1M HCl is added. The solution was diluted to 50 mL with water and purified by the solid phase extraction column, and then tested.

f. Food Packaging Material

A food packaging material sample is cut into small pieces of 2 mm $\times$ 2 mm. About 1.0 g of sample is weighed, put into a 50 mL centrifuge tube, added with the internal standard substance or the internal standard working solution, and mixed uniformly. 10 mL methanol was added, ultrasonically extracted for 40 min, and centrifuged at 10000 rpm for 5 min. 5 mL of the supernatant is put into the 15 mL centrifuge tube, concentrate to 0.5 mL with nitrogen at 40°C, and then diluted with 12 mL water, purified by the solid phase extraction column, and finally tested.

g. Blood

A biological sample fetal bovine serum (FBS) is taken as an example. Into a 15 mL centrifuge tube, 0.5 mL of FBS is put, added with the internal standard substance or the internal standard working solution, gently shaken for 30 seconds, and aged in a refrigerator at 4°C for 4 hours. Subsequently, 1 mL of 0.5M TBA, 2 mL of 0.25M $Na_2CO_3$, and 4 mL of methyl tertiary butyl ether (MTBE), are added to the centrifuge tube, vortexed for 10 seconds, shake at 270 rpm for 20 minutes, and then centrifuged for 10 minutes (15°C, 4000 rpm) to extract the supernatant. The supernatant was extracted, and the above procedure is repeated 3 times. After combining the supernatant, 1 mL of methanol is added, and then concentrate to 0.5 mL under nitrogen (45°C). Afterwards, 12 mL of water was added for dilution, purified by the solid phase extraction column, and then tested.

h. Urine

10 mL of urine is transferred to a 50 mL centrifuge tube, and the internal standard substance or the internal standard working solution was added. After 40 mL of water is added, the solution was purified by the solid phase extraction column and waiting for test.

The type of solid phase extraction column used for sample purification may be selected as a WAX solid phase extraction column or an HLB solid phase extraction column according to the type of PFASs target. The samples in Table 2 that are subsequently subjected to LC-MS/MS analysis can be purified using the WAX solid phase extraction column, such as a SHIMSEN Styra WAX 60 mg/3 mL solid phase extraction column. The samples in Table 4 that are subsequently analyzed by GC-MS/MS can be purified using the HLB solid phase extraction column.

<Operation method of the sample passing through WAX/HLB solid phase extraction column>

The WAX solid phase extraction column is activated with 4 mL of 0.1% ammonia methanol solution, 4 mL of methanol and 4 mL of water. After sample loading, 4 mL of ammonium acetate solution with pH = 4 is used to remove impurities. The solid phase extraction column is drained by a pump to remove water, and 4 mL of methanol and 4 mL of 0.1% ammonia methanol solution are used for elution. An eluate is concentrated to 1 mL and transferred to a sample injection bottle for testing.

The HLB solid phase extraction column is activated with 7 mL of methanol and 7 mL of water. After sample loading, 5 mL of 20% methanol/aqueous solution was added to remove impurities. The solid phase extraction column is drained by a pump to remove water, and 10 mL of methanol is used for eluting a target compound. Finally, an eluate is concentrated to 1 mL and transferred to the sample injection bottle for testing.

<Detailed operation process of blood sample passing through WAX solid phase extraction column>

Rinsing: 4 mL of 0.1% ammonia methanol, 4 mL of chromatographic grade methanol, and 4 mL of ultrapure water pass through the column in sequence.

Loading: A sample (0.5 mL concentrate + 12 mL water) is poured into the column. Specifically, 10 mL of ultrapure water is added to a 15 mL centrifuge tube, vortexed for 10 s, and poured into the column. A dilute methanol aqueous solution (5 mL water + 0.5 mL methanol) is then added to the centrifuge tube, vortexed and poured into the column.

Removal of impurities: After loading, 4 mL of $NH_4Ac$ (25 mmol/L) is added.

Draining: A vacuum pump is turned on for 30 minutes to drain the water in the column. After the time is up, the pump is turned off.

Receiving: A new 15 mL centrifuge tube is placed, followed by eluting with 4mL of methanol and 4 mL of 0.1% ammonia methanol in sequence.

The eluent was evaporated to near-dryness under nitrogen at 50°C, and reconstitute with 0.2 mL of pure methanol. After standing for 10 minutes, the purified extract is transferred to a 2 mL microcentrifuge tube and placed in a -20°C refrigerator for freezing overnight. The next day, the tube was centrifuged at 12000 rpm for 10 minutes at 4°C. Then, 0.1 mL of the supernatant is transfer to a sample injection bottle and measured on the instrument.

It should be noted that the above sample pretreatment method is merely exemplary, and in other embodiments of the present disclosure, other samples may also be analyzed, or different pretreatment methods may be used, which is not limited in the present disclosure.

5. <Analysis Steps>

5.1 Instrument conditions

5.1.1 Reference conditions of liquid chromatography-tandem mass spectrometry (LC-MS/MS)

<Example>

Column temperature: 40°C
Injection volume: 5 μL
Flow rate: 0.4 mL/min
Mobile phase A: 20 mM ammonium acetate, 0.1% (v/v) $NH_4OH$ aqueous solution, pH ≈ 9, which does not exceed a pH range of a Shim-pack GIST Phenyl-Hexyl analytical column.
Mobile phase B: acetonitrile
Gradient procedure:

Table 1 LC gradient procedure

| Time (min) | Mobile phase A (%) | Mobile phase B (%) |
|---|---|---|
| 0 | 90 | 10 |
| 1 | 90 | 10 |
| 15 | 20 | 80 |
| 15.1 | 2 | 98 |
| 17 | 2 | 98 |
| 17.1 | 90 | 10 |
| 20 | 90 | 10 |

Mass spectrometry (MS) reference conditions:

Ion source: ESI
Atomizing gas flow rate: 3.0 L/min
Drying gas flow rate: 10.0 L/min
Heating gas flow rate: 10.0 L/min
Desolvation tube temperature: 100°C
Heating module temperature: 200°C
Interface temperature: 300°C

Regarding the ESI ion source, in the prior art, the desolvation tube temperature is about 250°C, the heating module temperature is about 300°C, and the interface temperature is about 350°C, which are usually selected for PFASs analysis. In this embodiment, by lowering the desolvation tube temperature, the heating module temperature and the interface temperature, an in-source pyrolysis can be effectively reduced and detection sensitivity can be improved.

Scanning Mode: The multiple reaction monitoring MRM is used for quantitative or qualitative precursor-product ion pairs, which have been preset and saved in the tandem mass spectrometry system, and the specific detection parameters refer to Table 2 and Table 3.

It should be noted that, in this embodiment, the tandem mass spectrometry mainly performs negative ion scanning, and some channels may be switched to positive ion scanning within a specified time period. Specifically, in a primary measurement process, the tandem mass spectrometry switches between a positive ion scanning mode and a negative ion scanning mode according to the type of the PFASs to be measured. In this embodiment, when 5:3 FTB and 5:1:2 FTB are processed, the positive ion scanning mode is executed or the current mode is switched to the positive ion scanning mode, and the negative ion scanning mode is adopted in other time periods or other channels.

Table 2 MRM Analysis Conditions for LC-MS/MS

| No. | Compound name | Retention time (min) | Polarity | Type | Quantitative ion | Qualitative ion 1 | Qualitative Ion 2 |
|---|---|---|---|---|---|---|---|
| 1 | PFBA | 2.315 | - | Target | 213.10 > 169.05 | | |
| 2 | MPFBA | 2.315 | - | Internal standard | 217.10 > 172.10 | | |
| 3 | PFHxPA | 3.048 | - | Target | 398.90 > 79.00 | | |
| 4 | PF4OPeA | 3.438 | - | Target | 228.90 > 84.95 | 228.90 > 19.00 | |
| 5 | Cl-PFHxPA | 4.694 | - | Target | 414.90 > 79.00 | | |
| 6 | 3:3 FTCA | 4.523 | - | Target | 240.90 > 117.00 | 240.90 > 177.10 | 240.90 > 63.00 |
| 7 | L-PFPrS | 4.959 | - | Target | 249.00 > 80.00 | 249.00 > 98.95 | 249.00 > 119.00 |
| 8 | PFPeA | 5.563 | - | Target | 262.90 > 219.10 | | |
| 9 | FBSA | 8.204 | - | Target | 298.00 > 78.00 | | |
| 10 | PHSOHx A | 6.214 | - | Target | 279.00 > 84.70 | | |
| 11 | 6:2 PAP | 8.017 | - | Target | 442.90 > 96.95 | 442.90 > 79.05 | |
| 12 | M2-6:2PAP | 8.017 | - | Internal standard | 444.90 > 96.95 | 444.90 > 79.00 | |
| 13 | PFOPA | 7.191 | - | Target | 498.70 > 79.00 | | |
| 14 | 4:2FTSA | 7.002 | - | Target | 326.90 > 307.10 | 326.90 > 81.00 | |
| 15 | M2-4:2FTSA | 7.002 | - | Internal standard | 328.90 > 309.10 | | |
| 16 | 3,6-OPFHpA | 7.181 | - | Target | 201.10 > 85.00 | 201.10 > 19.10 | |
| 17 | M3PFBS | 7.275 | - | Internal standard | 301.90 > 80.00 | 301.90 > 99.00 | |
| 18 | PFBS | 7.275 | - | Target | 299.00 > 79.90 | 299.00 > 99.00 | |
| 19 | Cl-PFOPA | 7.566 | - | Target | 514.80 > 79.05 | | |
| 20 | MPFHxA | 7.353 | - | Internal standard | 314.90 > 270.10 | | |

(continued)

| No. | Compound name | Retention time (min) | Polarity | Type | Quantitative ion | Qualitative ion 1 | Qualitative Ion 2 |
|---|---|---|---|---|---|---|---|
| 21 | PFHxA | 7.353 | - | Target | 313.10 > 269.10 | 313.10 > 118.90 | |
| 22 | M3HFPO-DA | 7.796 | - | Internal standard | 287.00 > 169.00 | 332.00 > 287.10 | |
| 23 | Gen-X(HFPO-DA) | 7.796 | - | Target | 285.00 > 169.00 | 329.00 > 285.00 | |
| 24 | PFEESA | 7.922 | - | Target | 314.90 > 135.00 | 314.90 > 69.05 | 314.90 > 83.00 |
| 25 | 5:3 FTCA | 8.029 | - | Target | 341.00 > 217.00 | 341.00 > 237.05 | 341.00 > 257.00 |
| 26 | P5MeODI OXOAc | 8.083 | - | Target | 339.20 > 113.05 | 339.20 > 85.05 | |
| 27 | M6:2 FTUCA | 8.136 | - | Internal standard | 359.00 > 293.95 | 359.00 > 244.00 | 359.00 > 94.00 |
| 28 | 6:2 FTUCA | 8.136 | - | Target | 357.10 > 292.95 | 357.10 > 243.00 | 357.10 > 92.95 |
| 29 | 6:2 FTCA | 8.179 | - | Target | 377.10 > 292.95 | 377.10 > 63.00 | |
| 30 | M6:2 FTCA | 8.179 | - | Internal standard | 379.00 > 293.95 | 379.00 > 64.00 | |
| 31 | PFDPA | 8.745 | - | Target | 598.70 > 79.05 | | |
| 32 | 8:2 PAP | 9.431 | - | Target | 542.90 > 97.00 | 542.90 > 79.05 | |
| 33 | M2-8:2 PAP | 9.431 | - | Internal standard | 544.90 > 96.95 | 544.90 > 79.05 | |
| 34 | PFHpA | 8.441 | - | Target | 363.10 > 319.00 | 363.10 > 169.10 | |
| 35 | PFPeS | 8.582 | - | Target | 348.90 > 79.90 | 348.90 > 98.90 | |
| 36 | NADON A | 8.793 | - | Target | 376.90 > 251.00 | 376.90 > 85.05 | |
| 37 | 6:2 FTSA | 8.932 | - | Target | 426.90 > 407.00 | 426.90 > 81.00 | |
| 38 | M2-6:2 FTSA | 8.932 | - | Internal standard | 428.90 > 409.00 | | |
| 39 | 5:3 FTB | 8.607 | + | Target | 414.00 > 58.00 | 414.00 > 104.00 | |
| 40 | 5:1:2 FTB | 8.722 | + | Target | 432.00 > 58.00 | 432.00 > 104.00 | |
| 41 | MPFOA | 9.231 | - | Internal standard | 417.10 > 372.10 | | |
| 42 | PFOA | 9.231 | - | Target | 413.10 > 369.00 | 413.10 > 169.10 | |

(continued)

| No. | Compound name | Retention time (min) | Polarity | Type | Quantitative ion | Qualitative ion 1 | Qualitative Ion 2 |
|---|---|---|---|---|---|---|---|
| 43 | 7:3 FTCA | 9.682 | - | Target | 441.10 > 316.90 | 441.10 > 336.90 | 441.10 > 267.00 |
| 44 | FHxSA | 10.85 | - | Target | 397.8000 > 77.90 | 397.80 > 168.85 | 397.80 > 377.95 |
| 45 | PFHxS | 9.459 | - | Target | 398.90 > 80.00 | 398.90 > 99.00 | |
| 46 | MPFHxS | 9.459 | - | Internal standard | 402.90 > 84.00 | 402.90 > 103.00 | |
| 47 | 8:2 FTCA | 9.635 | - | Target | 476.90 > 392.90 | 476.90 > 62.95 | 476.90 > 242.95 |
| 48 | M8:2 FTCA | 9.635 | - | Internal standard | 479.00 > 393.85 | 479.00 > 63.95 | |
| 49 | 8:2 FTUCA | 9.617 | - | Target | 456.90 > 392.90 | 456.90 > 342.85 | 456.90 > 119.10 |
| 50 | FOSAA | 10.22 6 | - | Target | 555.70 > 497.80 | 555.70 > 418.85 | 555.70 > 219.00 |
| 51 | N-MeFBSA-M | 11.26 2 | - | Target | 312.00 > 219.00 | 312.00 > 188.00 | 312.00 > 65.00 |
| 52 | MPFNA | 9.902 | - | Internal standard | 468.10 > 423.00 | | |
| 53 | PFNA | 9.902 | - | Target | 463.10 > 419.00 | 463.00 > 219.10 | 463.00 > 169.00 |
| 54 | PFECHS | 10.10 4 | - | Target | 460.80 > 380.90 | 460.80 > 98.95 | |
| 55 | PFHpS | 10.17 3 | - | Target | 449.00 > 80.00 | 449.00 > 99.00 | |
| 56 | M2-8:2 FTSA | 10.19 2 | - | Internal standard | 528.90 > 508.90 | | |
| 57 | 8:2 FTSA | 10.19 2 | - | Target | 526.90 > 506.90 | 526.90 > 81.00 | |
| 58 | FOSA | 12.31 1 | - | Target | 498.10 > 78.00 | | |
| 59 | MPFDA | 10.48 | - | Internal standard | 515.10 > 470.10 | | |
| 60 | PFDA | 10.48 | - | Target | 513.10 > 469.10 | 513.10 > 219.10 | |
| 61 | d3-N-MeFOSA A | 10.52 3 | - | Internal standard | 573.00 > 418.85 | 573.00 > 482.80 | 573.00 > 514.90 |
| 62 | N-MeFOSA A | 10.52 . | - | Target | 569.70 > 418.85 | 569.70 > 482.80 | 569.70 > 511.80 |
| 63 | d5-N-EtFOSAA | 10.75 | - | Internal standard | 589.00 > 418.85 | 589.00 > 530.85 | 589.00 > 482.80 |
| 64 | N-EtFOSAA | 10.75 | - | Target | 583.90 > 418.75 | 583.90 > 482.85 | |

(continued)

| No. | Compound name | Retent ion time (min) | Polarity | Type | Quantitative ion | Qualitative ion 1 | Qualitative Ion 2 |
|---|---|---|---|---|---|---|---|
| 65 | 10:2 FTCA | 10.75 5 | - | Target | 576.90 > 493.05 | | |
| 66 | M10:2 FTCA | 10.75 5 | - | Internal standard | 579.00 > 493.80 | 579.00 > 513.80 | 579.00 > 64.00 |
| 67 | MPFOS | 10.76 9 | - | Internal standard | 502.90 > 80.00 | 502.90 > 99.00 | |
| 68 | PFOS | 10.76 9 | - | Target | 498.90 > 80.00 | 498.90 > 99.00 | |
| 69 | 10:2 FTUCA | 10.74 7 | - | Target | 556.90 > 492.85 | 556.90 > 242.95 | 556.90 > 442.65 |
| 70 | M10:2 FTUCA | 10.74 7 | - | Internal standard | 559.00 > 493.85 | 559.00 > 243.90 | 559.00 > 443.80 |
| 71 | MPFUdA | 11.00 7 | - | Internal standard | 565.10 > 519.90 | | |
| 72 | PFUdA | 11.00 7 | - | Target | 562.90 > 518.90 | 562.90 > 269.10 | 562.90 > 319.00 |
| 73 | 6:2 F-53B | 11.22 2 | - | Target | 530.90 > 351.00 | 530.90 > 83.10 | |
| 74 | 10:2 FTSA | 11.20 5 | - | Target | 626.90 > 606.90 | 626.90 > 81.00 | |
| 75 | PFNS | 11.30 7 | - | Target | 548.90 > 79.90 | 548.90 > 99.00 | |
| 76 | MPFDoA | 11.49 2 | - | Internal standard | 615.30 > 569.90 | | |
| 77 | PFDoA | 11.49 2 | - | Target | 612.90 > 568.90 | 612.90 > 169.10 | |
| 78 | PFDS | 11.79 3 | - | Target | 598.90 > 80.00 | 598.90 > 99.00 | |
| 79 | PFTrDA | 11.94 4 | - | Target | 662.90 > 618.90 | 662.90 > 169.10 | |
| 80 | 8:2 F-53B | 12.19 2 | - | Target | 630.90 > 450.90 | 630.90 > 83.10 | |
| 81 | 6:6 PFPiA | 12.33 1 | - | Target | 700.80 > 400.75 | | |
| 82 | PFTeDA | 12.37 | - | Target | 712.90 > 669.00 | 712.90 > 169.10 | |
| 83 | PFDoS | 12.66 3 | - | Target | 698.90 > 99.00 | 698.90 > 80.00 | |
| 84 | 6:8 PFPiA | 13.09 1 | - | Target | 800.80 > 400.85 | 800.80 > 500.80 | 800.80 > 431.80 |
| 85 | PFHxDA | 13.15 9 | - | Target | 812.90 > 768.90 | 812.90 > 169.10 | |
| 86 | 8:8 PFPiA | 13.75 9 | - | Target | 900.80 > 500.85 | | |

(continued)

| No. | Compoun d name | Retent ion time (min) | Polar ity | Type | Quantitativ e ion | Qualitative ion 1 | Qualitative Ion 2 |
|-----|----------------|----------------------|-----------|------|-------------------|-------------------|-------------------|
| 87 | N-MeFOSA-M | 13.96 8 | - | Target | 511.90 > 169.05 | 511.90 > 219.00 | 511.90 > 268.95 |
| 88 | PFODA | 13.88 2 | - | Target | 912.90 > 868.90 | 912.90 > 169.10 | |
| 89 | N-MeFOSE | 13.63 | - | Target | 616.10 > 58.90 | | |
| 90 | D7-N-MeFOSE | 13.63 | - | Internal standard | 623.20 > 59.10 | | |
| 91 | N-EtFOSE | 14.03 5 | - | Target | 630.00 > 58.90 | 630.00 > 58.90 | |
| 92 | D9-N-MeFOSE | 14.03 5 | - | Internal standard | 639.20 > 58.90 | | |
| 93 | N-EtFOSA-M | 14.39 3 | - | Target | 525.90 > 169.10 | 525.90 > 219.05 | 525.90 > 269.00 |

Table 3 Summary of full names and abbreviations of PFASs detectable by LC-MS/MS

| | | Full name | Abbreviation | Molecular formula | Group-matched internal standard |
|--|--|-----------|--------------|-------------------|---------------------------------|
| | | **Perfluoroalkyl carboxylic acid (PFCA)** | | | |
| | 1 | Perfluorobutanoic acid | PFBA | $C_4F_7O_2H$ | MPFBA |
| | 2 | Perfluoropentanoic acid | PFPeA | $C_5F_9O_2H$ | MPFBA |
| | 3 | Perfluorohexanoic acid | PFHxA | $C_6F_{11}O_2H$ | MPFHxA |
| | 4 | Perfluoroheptanoic acid | PFHpA | $C_7F_{13}O_2H$ | MPFHxA |
| | 5 | Perfluorooctanoic acid | PFOA | $C_8F_{15}O_2H$ | MPFOA |
| | 6 | Perfluorononanoic acid | PFNA | $C_9F_{17}O_2H$ | MPFNA |
| | 7 | Perfluorodecanoic acid | PFDA | $C_{10}F_{19}O_2H$ | MPFDA |
| | 8 | Perfluoroundecanoic acid | PFUdA | $C_{11}F_{21}O_2H$ | MPFUdA |
| | 9 | Perfluorododecanoic acid | PFDoA | $C_{12}F_{23}O_2H$ | MPFDoA |
| | 10 | Perfluorotridecanoic acid | PFTrDA | $C_{13}F_{25}O_2H$ | MPFDoA |
| | 11 | Perfluorotetradecanoic acid | PFTeDA | $C_{14}F_{27}O$ | MPFDoA |
| | 12 | Perfluoro-n-hexadecanoic acid | PFHxDA | $C_{16}F_{31}O_2H$ | MPFDoA |
| | 13 | Perfluoro-n-octadecanoic acid | PFODA | $C_{18}F_{35}O_2H$ | MPFDoA |
| | | **Perfluoroalkyl sulfonic acids(PFSA)** | | | |
| | 14 | Sodium perfluoro-1-propanesulfonic acid | PFPrS | $C_3F_7SO_3Na$ | M3PFBS |
| | 15 | Perfluorobutanesulfonic acid | PFBS | $C_4F_9SO_3H$ | M3PFBS |
| | 16 | Perfluoropentane-l-sulphonic acid | PFPeS | $C_5F_{11}SO_3H$ | MPFHxS |
| | 17 | Perfluorohexanesulfonic acid | PFHxS | $C_6F_{13}SO_3H$ | MPFHxS |
| | 18 | Perfluoroheptyl sulfonic acid | PFHpS | $C_7F_{15}SO_3H$ | MPFHxS |
| | 19 | Perfluorooctanesulfonic acid | PFOS | $C_8F_{17}SO_3H$ | MPFOS |
| | 20 | Perfluorononane sulfonic acid | PFNS | $C_9F_{19}SO_3H$ | MPFOS |
| | 21 | Perfluorodecyl sulfonic acid | PFDS | $C_{10}F_{21}SO_3H$ | MPFOS |

(continued)

| | Perfluoroalkyl sulfonic acids(PFSA) | | | |
|---|---|---|---|---|
| 22 | Perfluorododecanesulfonic acid | PFDoS | C12F25S O3H | MPFOS |
| | **Fluorotelomer sulfonic acids (FTSA)** | | | |
| 23 | 4:2 fluorotelomer sulfonic acid | 4:2 FTSA | C6F9SO3 H5 | M2-4:2FTSA |
| 24 | 6:2 fluorotelomer sulfonic acid | 6:2 FTSA | C8F13SO 3H5 | M2-6:2FTSA |
| 25 | 8:2 fluorotelomer sulfonic acid | 8:2 FTSA | C10F17S O3H5 | M2-8:2FTSA |
| 26 | 10:2 fluorotelomer sulfonic acid | 10:2 FTSA | C12F21S O3H4Na | M2-8:2FTSA |
| | **Fluorotelomer carboxylic acids (FTCA)** | | | |
| 27 | 2-Perfluorohexyl ethanoic acid (6:2) | 6:2 FTCA | C8F13O2 H3 | M6:2 FTCA |
| 28 | 2-Perfluorooctyl ethanoic acid (8:2) | 8:2 FTCA | C10F17O 2H3 | M8:2 FTCA |
| 29 | 2-Perfluorodecyl ethanoic acid (10:2) | 10:2 FTCA | C12F21O 2H3 | M10:2 FTCA |
| 30 | 2H-Perfluoro-2-octenoic acid (6:2) | 6:2 FTUCA | C8F12O2 H2 | M6:2 FTUCA |
| 31 | 2H-Perfluoro-2-decenoic acid (8:2) | 8:2 FTUCA | C10F16O 2H2 | M10:2 FTUCA |
| 32 | 2H-Perfluoro-2-dodecenoic acid (10:2) | 10:2 FTUCA | C12F20O 2H2 | M10:2 FTUCA |
| 33 | 2H, 2H, 3H, 3H-perfluorohexanoic acid | 3:3 FTCA | C6F7O2H 5 | MPFBA |
| 34 | 2H, 2H, 3H, 3H-perfluorooctanoic acid | 5:3 FTCA | C8F11O2 H5 | MPFHxA |
| 35 | 2H, 2H, 3H, 3H-perfluorodecanoic acid | 7:3 FTCA | C10F15O 2H5 | MPFOA |
| | **Polyfluoroalkyl ether sulfonates (PFESA)** | | | |
| 36 | Perfluoro(2-ethoxyethane)sulfonic acid | PFEESA | C4F9SO4 H | M3PFBS |
| 37 | 9-chlorohexadecafluoro-3-oxanonane-1-sulfonic acid | 6:2 F-53B | C8F16Cl SO4H | MPFOS |
| 38 | 11-chloroeicosafluoro-3-oxaundecane-1-sulfonic acid | 8:2 F-53B | C10F20Cl SO4H | MPFOS |
| | **Perfluoroalkyl ether carboxylic acids (PFECA)** | | | |
| 39 | Hexafluoropropylene oxide dimer acid | Gen-X(HFPO-DA) | C6F11O3 H | M3HFPO-DA |
| 40 | 4,8-dioxa-3H-perfluorononanoic acid | ADONA (Na-DONA) | C7F12O4 H2 | MPFHxA |
| 41 | Perfluor-3-methoxypropanoic acid | PF4OPeA | C4F7O3H | MPFBA |
| 42 | Perfluoro-4-methoxybutanoic acid | PFSOHxA | C5F9O3H | MPFBA |
| 43 | Perfluoro-3,6-dioxaheptanoic acid | 3,6-OPFHpA | C5F9O4H | MPFHxA |
| 44 | Perfluoro([5-methoxy-1,3-dioxolan-4-yl]oxy)acetic acid (C6O4) | P5MeODIOXOAc | C6F9O6H | M3HFPO-DA |
| | **Perfluoalkane sulfonamides (FASA)** | | | |
| 45 | Perfluoro-1-butanesulfonamide | FBSA | C4F9SO2 NH2 | M3PFBS |
| 46 | Perfluoro-1-hexanesulfonamide | FHxSA | C6F13SO 2NH2 | MPFBA |
| 47 | Perfluorooctanesulfonamide | FOSA | C8F17SO 2NH2 | MPFOS |
| 48 | N-methylperfluoro-1-butanesulfonamide | N-MeFBSA | C5F9SO2 NH4 | d5-N-EtFOSAA |
| 49 | N-methylperfluoro-1-octanesulfonamide | N-MeFOSA | C9F17SO 2NH4 | d5-N-EtFOSAA |
| 50 | N-ethylperfluoro-1-octanesulfonamide | N-EtFOSA | C10F17S O2NH6 | d5-N-EtFOSAA |

(continued)

| Perfluoalkane sulfonamides (FASA) | | | | |
|---|---|---|---|---|
| 51 | N-methylperfluoro-1-octanesulfonamidoethanol | N-MeFOSE | C11H8F1 7NO3 S | d7-N-MeFOSE |
| 52 | N-ethylperfluoro-1-octanesulfonamidoethanol | N-EtFOSE | C12H10F 17NO3S | d9-N-EtFOSE |
| **Perfluoroalkane sulfonaimido acetic acids(FASAA)** | | | | |
| 53 | Perfluoro-1-octanesulfonamidoacetic acid | FOSAA | C10F17S O4NH4 | d3-N-MeFOSAA |
| 54 | N-methyl perfluorooctanesulfonamidoacetic acid | N-MeFOSAA | C11F17S O4NH6 | d3-N-MeFOSAA |
| 55 | N-ethylperfluoro-1-octanesulfonamidoacetic acid | N-EtFOSAA | C12F17S O4NH8 | d5-N-EtFOSAA |
| **Fluorotelemer betaine (FTB)** | | | | |
| 56 | 2-[(4,4,5,5,6,6,7,7,8,8,8-Undecafluorooctyl)dimethylamm onio]acetate | 5:3 FTB | C12F11N O2H14 | MPFHxA |
| 57 | 2-[(3,4,4,5,5,6,6,7,7,8,8,8-Dodecafluorooctyl)dimethylamm onio]acetate | 5:1:2 FTB | C12F12N O2H13 | MPFHxA |
| **Cyclic PFASs** | | | | |
| 58 | Perfluoro-4-ethylcyclohexanesulfonate | PFECHS | C8F15SO 3K | M2-8:2FTSA |
| **Perfluoroalkyl phosphonic acids (PFPA), perfluoroalkyl phosphinic acids (PFPiA) and polyfluoroalkyl phosphate esters (PAP)** | | | | |
| 59 | Perfluorohexylphosphonic acid | PFHxPA | C6F13PO 3H2 | MPFBA |
| 60 | Perfluorooctylphosphonic acid | PFOPA | C8F17PO 3H2 | M2-6:2PAP |
| 61 | Perfluorodecylphosphonic acid | PFDPA | C10F21P O3H2 | M2-8:2 PAP |
| 62 | sodium 1H, 1H, 2H, 2H-perfluorooctylphosphate | 6:2 mono-PAP | C8F13PO 4H4Na2 | M2-6:2PAP |
| 63 | sodium 1H, 1H, 2H, 2H-perfluorodecylphosphate | 8:2 mono-PAP | C10F17P O4H4Na2 | M2-8:2 PAP |
| 64 | Sodium bis(perfluorohexyl)phosphinate | 6:6PFPiA | C12F26P O2Na | MPFDoA |
| 65 | Sodium perfluorohexylperfluorooctylphos phinate | 6:8PFPiA | C14F30P O2Na | MPFDoA |
| 66 | Sodium bis(perfluorooctyl)phosphinate | 8:8PFPiA | C16F34P O2Na | MPFDoA |

The concentration of the target is measured by an internal standard method. Referring to Table 3, in this embodiment, 25 isotope internal standards are used for 93 PFASs targets, correspondingly, 93 PFASs are divided into 25 groups, and each group correspondingly uses one isotope internal standard.

Taking the group using MPFBA as the isotope internal standard as an example, the group includes PFBA, PFHxPA, PF4OPeA, Cl-PFHxPA, 3:3 FTCA, 5:3 FTCA, PH50HxA, FHxSA and MPFBA, a total of 9 PFASs. A concentration ratio of each of PFBA, PFHxPA, PF4OPeA, Cl-PFHxPA, 3:3 FTCA, 5:3 FTCA, PH5OHxA, and FHxSA to MPFBA can be determined based on a peak area/peak height ratio of each to MPFBA and a standard curve, and then a mass concentration of each can be determined according to formula (1).

$$\rho_i = \frac{x_i \times m_{is}}{v_w} \qquad (1)$$

Here, $p_i$ is the mass concentration of the i-th PFASs in the sample, $x_i$ is the concentration ratio of the i-th PFASs in the sample to the corresponding internal standard calculated by the standard curve, $m_{is}$ is the added mass of the internal standard corresponding to the i-th PFASs, and $v_w$ is the sample volume.

The standard curve is established based on the measurement of standard solutions of targets with different concentrations (with internal standards added), with the concentration ratio of the target to the corresponding internal standard as an abscissa, and a ratio of the peak area/peak height of the target to the peak area/peak height of the internal standard as an ordinate.

It should be noted that the corresponding grouping manners of different PFASs and isotope internal standards in Table 3 are merely illustrative and are not limited thereto, and those skilled in the art may adjust the corresponding grouping of each target according to actual conditions.

5.1.2 Reference conditions of gas chromatography-tandem mass spectrometry (GC-MS/MS)

Inlet temperature: 280°C

Column oven heating program: Maintaining at 40°C for 1 min, then increasing the temperature to 240°C at a rate of 20°C/min and maintaining the temperature for 3 min.

Injection volume: 1 μL

Carrier gas control mode: Constant Linear velocity

Linear velocity: 43.5 cm/sec

Injection mode: Unsplit stream sampling

Mass spectrometry reference conditions:

Ion source temperature: 200°C

Interface temperature: 300°C

Detector voltage: + 0.1 kV (Relative voltage value)

Scanning mode: Multiple reaction monitoring (MRM), specific detection parameters refer to Table 4 and Table 5.

Table 4 MRM Analysis Conditions for GC-MS/MS

| No. | Compound name | Retention time (min) | Retention index | Type | Quantitative ion | Qualitative ion 1 | Qualitative Ion 2 |
|---|---|---|---|---|---|---|---|
| 1 | 5:2s FTOH | 4.511 | 1182 | Target | 219.00 > 69.00 | 299.00 > 69.00 | 219.00 > 131.00 |
| 2 | M4:2 FTOH | 4.543 | 1186 | Internal standard | 199.00 > 130.10 | 196.00 > 77.10 | 244.00 > 127.10 |
| 3 | 4:2 FTOH | 4.568 | 1190 | Target | 196.00 > 127.10 | 295.00 > 180.90 | 344.00 > 95.10 |
| 4 | M6:2 FTOH | 4.94 | 1241 | Internal standard | 298.00 > 129.10 | 399.00 > 263.20 | 399.00 > 97.10 |
| 5 | 6:2 FTOH | 4.955 | 1243 | Target | 344.00 > 127.10 | 463.00 > 394.80 | 405.00 > 68.90 |
| 6 | 7:2s FTOH | 4.967 | 1245 | Target | 399.00 > 69.10 | 505.00 > 169.40 | 505.00 > 69.20 |
| 7 | M8:2 FTOH | 5.452 | 1311 | Internal standard | 448.00 > 129.10 | 248.00 > 97.00 | 248.00 > 130.00 |

(continued)

| No. | Compoun d name | Retenti on time (min) | Retenti on index | Type | Quantitativ e ion | Qualitativ e ion 1 | Qualitativ e Ion 2 |
|---|---|---|---|---|---|---|---|
| 8 | 8:2 FTOH | 5.464 | 1313 | Target | 405.00 > 119.20 | 348.00 > 96.00 | 348.00 > 129.10 |
| 9 | M10:2 FTOH | 6.057 | 1397 | Internal standard | 169.00 > 69.00 | 448.00 > 96.10 | 448.00 > 129.10 |
| 10 | 10:2 FTOH | 6.064 | 1398 | Target | 514.00 > 95.10 | 515.00 > 245.80 | 515.00 > 96.00 |

Table 5 Summary of full names and abbreviations of PFASs detectable by GC-MS/MS

| | Full name | Abbreviatio n | Molecular formula | Internal standard |
|---|---|---|---|---|
| 1 | 2-Perfluorobutyl ethanol (4:2) | 4:2 FTOH | C6F9OH5 | M4:2 FTOH |
| 2 | Perfluoropentyl ethanol (5:2 secondary) | 5:2s FTOH | C7F11OH5 | |
| 3 | 2-Perfluorohexyl ethanol (6:2) | 6:2 FTOH | C8F13OH5 | M6:2 FTOH |
| 4 | Perfluoroheptyl ethanol (7:2 secondary) | 7:2s FTOH | C9F15OH5 | |
| 5 | 2-Perfluorooctyl ethanol (8:2) | 8:2 FTOH | C10F17OH 5 | M8:2 FTOH |
| 6 | 2-Perfluorodecyl ethanol (10:2) | 10:2 FTOH | C12F21OH 5 | M10:2 FTOH |

6. <Test Results>

6.1 LC-MS/MS Test Results

Based on the LC-MS/MS conditions in <Example>, the PFASs mixture is analyzed. Specifically, in a primary process (that is, single injection) of eluting a sample with an alkaline mobile phase (containing 20 mM ammonium acetate, 0.1% (v/v) $NH_4OH$ aqueous solution, pH $\approx$ 9), 93 PFASs in the sample can be eluted sequentially at different retention times, and the signal intensity of different ion pairs used for quantitative/qualitative analysis can be recorded respectively using multiple channels of the tandem mass spectrometer. These eluted PFASs can be clearly distinguished using the MRM scanning mode of the tandem mass spectrometer, resulting in a chromatogram as shown in FIG. 2. In the FIG. 2, the X-coordinate represents the retention time, and the Y-coordinate represents the signal intensity of a specific ion pair scanned by the tandem mass spectrometry.

Refer to FIG. 2, under alkaline mobile phase conditions, the 93 PFASs to be measured can be distributed at different retention times and peak in sequence. By rationally designing working parameters of the tandem mass spectrometry, such as the sequential coordination of target ion pairs of multiple channels, it is possible to measure all these many types of PFASs in a single elution process without requiring too many channels. Moreover, more types of PFASs can be better ionized and obtain better responses on a detector of the tandem mass spectrometry, thereby achieving higher detection sensitivity. In addition, the 93 PFASs cover different classes, and may specifically include PFCAs, PFSAs, FASAs, PFESAs, PFECAs, FASAAs, PFPAs, PFPiAs, PAPs, FTSAs, FTCAs, and FTB, and any other suitable types of PFASs.

It should be noted that in this embodiment, rapid analysis on 93 PFASs is completed by single injection, but the embodiment of the present disclosure is not limited to a single injection analysis on a specific number of PFASs, and the number of PFASs can be increased or decreased as long as the scope of the present disclosure is not exceeded. For example, some types of PFASs are selected from the 93 PFASs for analysis, or some other types of PFASs are supplemented and replaced.

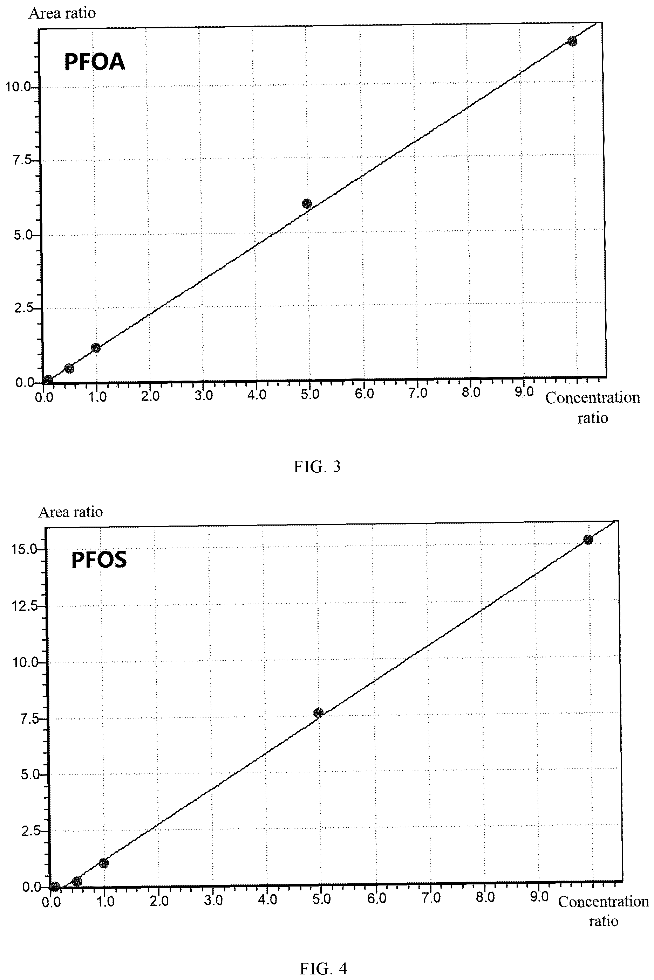

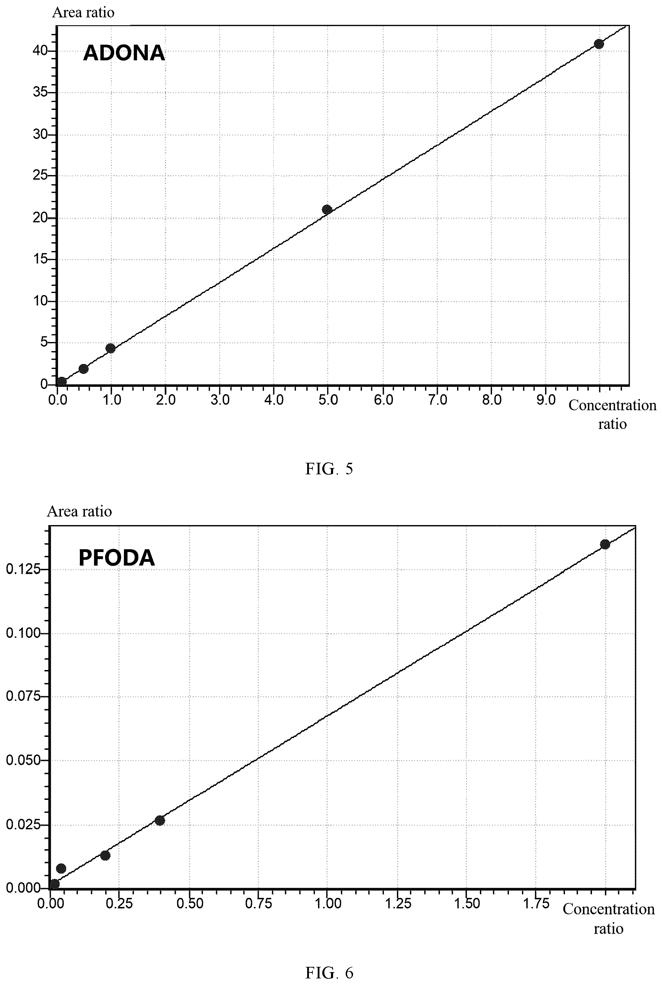

FIG. 3 to FIG. 6 respectively show standard curves established using a standard solution by taking PFOA, PFOS, ADONA and PFODA as targets in the LC-MS/MS system. In FIG. 3 to FIG. 6, the X-coordinate represents a concentration ratio of the target to the corresponding internal standard/standard solution, and the Y-coordinate represents an area ratio of a corresponding peak.

Referring to FIG. 3 to FIG. 6, it can be seen that the method provided in this example has good linearity for different types of PFASs.

6.2 GC-MS/MS Test Results

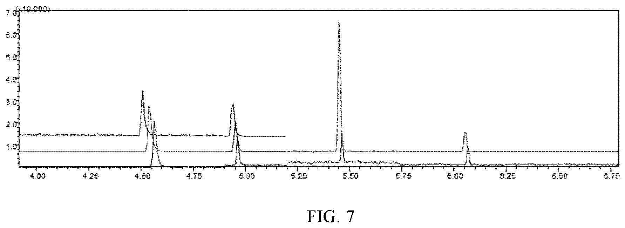

FIG. 7 is a chromatogram of 10 FTOHs obtained in this example. The chromatogram can also be obtained by single injection analysis. The abscissa represents the retention time, and the ordinate represents the signal intensity of a specific ion pair scanned by the tandem mass spectrometry. As shown in FIG. 7, 10 FTOHs peak in sequence at different retention times, the signal intensity of different ion pairs used for quantitative/qualitative analysis can be recorded respectively using multiple channels of the tandem mass spectrometer, and the 10 FTOHs can be clearly distinguished using the MRM scanning mode of the tandem mass spectrometer.

The above embodiments are merely exemplary embodiments of the present disclosure and are not intended to limit the present disclosure. Any modifications, equivalent substitutions and improvements made within the spirit and principles of the present disclosure shall be included in the protection scope of the present disclosure.

**Claims**

1. A method for measuring a concentration of a per- and polyfluoroalkyl substance, the method comprising:

   measuring concentrations of a plurality of per- and polyfluoroalkyl substances in a sample by liquid chromatography-tandem mass spectrometry in a primary measurement process of eluting the sample with an alkaline mobile phase, wherein
   the plurality of per- and polyfluoroalkyl substances at least include one or more perfluoroalkyl phosphonic acids/phosphinic acids or polyfluoroalkyl phosphate esters.

2. The method for measuring a concentration of a per- and polyfluoroalkyl substance according to claim 1, wherein the alkaline mobile phase is an alkaline mobile phase with pH = 8 to 10.

3. The method for measuring a concentration of a per- and polyfluoroalkyl substance according to claim 2, wherein the alkaline mobile phase is an alkaline mobile phase having a pH substantially equal to 9.

4. The method for measuring a concentration of a per- and polyfluoroalkyl substance according to claim 1, wherein the plurality of per- and polyfluoroalkyl substances include a plurality of combinations of perfluoroalkyl carboxylic acids, perfluoroalkyl sulfonic acids, perfluoroalkyl sulfonamides, perfluoroalkyl ether sulfonic acids, perfluoroalkyl ether carboxylic acids, perfluoroalkane sulfonaimido acetic acids, perfluoroalkyl phosphonic acids, perfluoroalkyl phosphinic acids, polyfluoroalkyl phosphate esters, fluorotelomer alcohols, fluorotelomer sulfonic acids, fluorotelomer carboxylic acids, and fluorotelemer betaine.

5. The method for measuring a concentration of a per- and polyfluoroalkyl substance according to claim 1, wherein in a primary measurement process, the tandem mass spectrometry switches between a positive ion scanning mode and a negative ion scanning mode according to the type of the per- and polyfluoroalkyl substance to be measured.

6. A liquid chromatography-tandem mass spectrometry system, wherein the liquid chromatography-tandem mass spectrometry system has a per- and polyfluoroalkyl substance concentration measurement mode, the liquid chromatography-tandem mass spectrometry system operating in the per- and polyfluoroalkyl substance concentration measurement mode is configured to measure concentrations of a plurality of per- and polyfluoroalkyl substances in a sample in a primary measurement process of eluting the sample with an alkaline mobile phase, and the plurality of per- and polyfluoroalkyl substances at least include one or more perfluoroalkyl phosphonic acids/phosphinic acids or polyfluoroalkyl phosphate esters.

7. The liquid chromatography-tandem mass spectrometry system according to claim 6, wherein the liquid chromatography-tandem mass spectrometry system has a per- and polyfluoroalkyl substance concentration measurement pipeline, and a pipe material used in the per- and polyfluoroalkyl substance concentration measurement pipeline does not contain fluorine.

8. The liquid chromatography-tandem mass spectrometry system according to claim 6, wherein the liquid chromatography-tandem mass spectrometry system has a delay column, and the delay column is disposed between a liquid pump and an analytical column.

9. The liquid chromatography-tandem mass spectrometry system according to claim 8, wherein the delay column is a C18 reversed phase chromatography column, and the analytical column is a phenyl-hexyl column.

10. The liquid chromatography-tandem mass spectrometry system according to claim 6, wherein the liquid chromatography-tandem mass spectrometry system uses an electrospray ion source as an ion source of tandem mass spectrometry, a desolvation tube temperature of the electrospray ion source is 100°C to 150°C, a heating module temperature is 200°C to 250°C, and an interface temperature is 300°C to 350°C.

FIG. 1

FIG. 2

FIG. 3

FIG. 4

FIG. 5

FIG. 6

FIG. 7

## INTERNATIONAL SEARCH REPORT

| International application No. |
| --- |
| **PCT/CN2023/114711** |

| A. | CLASSIFICATION OF SUBJECT MATTER |
| --- | --- |

G01N30/02(2006.01)i; G01N30/26(2006.01)i; G01N30/72(2006.01)i

According to International Patent Classification (IPC) or to both national classification and IPC

| B. | FIELDS SEARCHED |
| --- | --- |

Minimum documentation searched (classification system followed by classification symbols)

IPC:G01N30

Documentation searched other than minimum documentation to the extent that such documents are included in the fields searched

Electronic data base consulted during the international search (name of data base and, where practicable, search terms used)

CJFD, CNTXT, ENTXT, WPABS, VEN: 多氟烷基, 全氟烷基羧酸, 全氟烷基磺酸, 全氟烷基磺酰胺, 全氟烷基膦酸, 全氟烷基次膦酸, 全氟烷基磷酸酯, 液相色谱, 质谱, polyfluoroalkyl, perfluoroalkyl carboxylic acids, PFCAs, perfluoroalkyl sulfonic acids, PFSAs, perfluoroalkane sulfonamides, FASAs, perfluoroalkyl phosphonic acids, PFPAs, perfluoroalkyl phosphinic acids, PFPis, polyfluoroalkyl phosphate esters, PAPs, liquid chromatography, HPLC, UHPLC, UPLC, MS

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| X | CN 107024554 A (RESEARCH CENTER FOR ECO-ENVIRONMENTAL SCIENCES, CHINESE ACADEMY OF SCIENCES) 08 August 2017 (2017-08-08) description, paragraphs 5-15 | | 1-6, 10 |
| Y | CN 107024554 A (RESEARCH CENTER FOR ECO-ENVIRONMENTAL SCIENCES, CHINESE ACADEMY OF SCIENCES) 08 August 2017 (2017-08-08) description, paragraphs 5-15 | | 7-9 |
| X | 张蓓 等; (ZHANG, Bei et al.);. "高效液相色谱-串联质谱法测定食品接触用纸制品中全氟辛烷膦酸(C8 PFPA)和双全氟辛烷膦酸钠(C8/C8 PFPiA) (Non-official translation: Determination of Perfluorooctane Phosphonic Acid (C8 PFPA) and Sodium Bis-perfluorooctane Phosphonate (C8/C8 PFPiA) in Paper Products for Food Contact by High Performance Liquid Chromatography-tandem Mass Spectrometry)" 轻工标准与质量 *(Standard & Quality of Light Industry),* No. (04), 15 August 2018 (2018-08-15), 32-35 pages 32-35 | | 1-6, 10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/114711** |

### C. DOCUMENTS CONSIDERED TO BE RELEVANT

| Category* | Citation of document, with indication, where appropriate, of the relevant passages | Relevant to claim No. |
| --- | --- | --- |
| Y | 张蓓 等; (ZHANG, Bei et al.);. "高效液相色谱-串联质谱法测定食品接触用纸制品中全氟辛烷膦酸(C8 PFPA)和双全氟辛烷膦酸钠(C8/C8 PFPiA) (Non-official translation: Determination of Perfluorooctane Phosphonic Acid (C8 PFPA) and Sodium Bis-perfluorooctane Phosphonate (C8/C8 PFPiA) in Paper Products for Food Contact by High Performance Liquid Chromatography-tandem Mass Spectrometry)" 轻工标准与质量 (Standard & Quality of Light Industry), No. (04), 15 August 2018 (2018-08-15), 32-35 pages 32-35 | 7-9 |
| Y | CN 112684030 A (DALIAN UNIVERSITY OF TECHNOLOGY) 20 April 2021 (2021-04-20) description, paragraphs 35-50 | 7-9 |
| A | CN 105241995 A (SGS CSTC STANDARDS TECHNICAL SERVICES SHANGHAI CO., LTD.) 13 January 2016 (2016-01-13) entire document | 1-10 |
| A | CN 105784881 A (RESEARCH CENTER FOR ECO-ENVIRONMENTAL SCIENCES, CHINESE ACADEMY OF SCIENCES) 20 July 2016 (2016-07-20) entire document | 1-10 |
| A | CN 110954608 A (ZHEJIANG ACADEMY OF SCIENCE & TECHNOLOGY FOR INSPECTION & QUARANTINE) 03 April 2020 (2020-04-03) entire document | 1-10 |
| A | CN 112881553 A (RESEARCH CENTER FOR ECO-ENVIRONMENTAL SCIENCES, CHINESE ACADEMY OF SCIENCES) 01 June 2021 (2021-06-01) entire document | 1-10 |
| A | CN 113049728 A (NATIONAL RESERACH CENTER OF GEOANALYSIS) 29 June 2021 (2021-06-29) entire document | 1-10 |
| A | CN 114428143 A (GUANGDONG TESTING INSTITUTE OF PRODUCT QUALITY SUPERVISION et al.) 03 May 2022 (2022-05-03) entire document | 1-10 |
| A | US 2022229027 A1 (CHINESE ACAD INSPECTION & QUARANTINE) 21 July 2022 (2022-07-21) entire document | 1-10 |

Form PCT/ISA/210 (second sheet) (July 2022)

## INTERNATIONAL SEARCH REPORT
### Information on patent family members

International application No.

**PCT/CN2023/114711**

| Patent document cited in search report | | | Publication date (day/month/year) | Patent family member(s) | | | Publication date (day/month/year) |
|---|---|---|---|---|---|---|---|
| CN | 107024554 | A | 08 August 2017 | None | | | |
| CN | 112684030 | A | 20 April 2021 | None | | | |
| CN | 105241995 | A | 13 January 2016 | None | | | |
| CN | 105784881 | A | 20 July 2016 | None | | | |
| CN | 110954608 | A | 03 April 2020 | None | | | |
| CN | 112881553 | A | 01 June 2021 | None | | | |
| CN | 113049728 | A | 29 June 2021 | None | | | |
| CN | 114428143 | A | 03 May 2022 | None | | | |
| US | 2022229027 | A1 | 21 July 2022 | WO | 2021159889 | A1 | 19 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIU XIAOLEI et al.** *Chinese Journal of Analytical Chemistry*, 2018, vol. 9, 1400